# EUROPEAN PATENT APPLICATION

(11) **EP 4 660 502 A1**
(43) Date of publication of application: **10.12.2025**
(21) Application number: 24750228.9
(22) Date of filing: 29.01.2024
(51) Int. Cl.: F16L 19/02, F16B 39/24, F16B 39/282, F16B 43/00, F16L 21/00, F16L 21/08

(54) **CONNECTION MECHANISM FOR STEEL PIPE AND JOINT**

(30) Priority: 30.01.2023 JP 2023012153
(71) Applicant: O.N.Industries Co.Ltd., Tsuyama-shi, Okayama 708-0011 (JP)
(72) Inventor: YAMASHIMA, Mamoru, tsuyama-shi Okayama 708-0011 (JP); SEGAWA, Kazuyoshi, tsuyama-shi Okayama 708-0011 (JP)
(74) Representative: Hauck Patent- und Rechtsanwälte PartmbB
(86) International application number: PCT/JP2024/002705
(87) International publication number: WO 2024/162279

(57) **Abstract**

A connection mechanism for a steel pipe and a joint is provided to allow visual confirmation from the outside that the tightening between the joint and a nut has been reliably completed in piping work where the steel pipe is connected by the joint and the nut.

In the connection mechanism for a steel pipe and a joint, a male thread of the joint and a female thread of the nut are screwed together to tightly connect the steel pipe, and the other end side of an elastic ring, which is clamped between the joint and the nut and has one end side fixed to the joint, abuts on the steep inclined surface of a ratchet tooth on the side face of the nut to prevent relative loosening of the nut and the joint, and upon completion of the screwing of the male thread and the female thread, a hidden cylindrical portion covers the outer circumference of the elastic ring, allowing visual confirmation from the outside that the connection between the joint and the nut is complete.

## Description

### TECHNICAL FIELD

The present invention relates to a connection mechanism for a steel pipe and a joint which mechanism is mainly used for an indoor piping or the like in a construction.

### BACKGROUND ART

As a conventional technology of this type of connection mechanism for a steel pipe and a joint, there is provided a connection mechanism shown in Patent Literature 1 which connection mechanism was proposed earlier by the applicants. This connection mechanism makes it possible to firmly connect, without removing out, a joint body, which has an end portion provided with an engaged part, with a lock ring holder which has, in the end portion, an engagement ring part into which the engaged part is inserted for engaging, even when an engagement protrusion provided on the outer circumference of the engaged part is pressed and inserted, to the back of the inner circumference, through an opening notch portion provided on the inner circumference of the lock ring holder, and then the engagement protrusion is rotated and inserted in an engagement hole which communicates with the opening notch portion and is provided on the inner circumference, thereby to cause a pull-out force to act on the lock ring holder and the joint body. Then, the lock ring holder ordinarily prevents the steel pipe from moving in the removal direction and in itself is biased in the pull-out direction by a lock ring, thus increasing the friction between the engaged part and an inner surface of an engagement hole, thus preventing the rotating in the circumferential direction and preventing loosening.

Further, the connection mechanism for a steel pipe and a joint in the Patent Literature 2 is to connect the joint with a joining male thread formed on the outer circumference of the end portion, and a nut with a female thread for inserting and engaging the joint inside, by rotating the nut so as to screw the female thread with the male thread while inserting the end portion of the joint into the nut. In this process, the inclined surface on the end portion side of the mountain-shaped projection is pressed by the corner portion of the joint and the opposite inclined surface is pressed by the inclined corner portion of the nut, thereby preventing the steel pipe, which has the mountain-shaped projection, from moving in the axial direction and completing the connecting. Regarding the inclined corner portion of the nut; the member of the pipe expander used for expanding the end portion of the steel pipe into the mountain shape is used as it is, and thus, the inclined surface of the mountain-shaped projection and the inclined corner portion match completely in inclination angle and surface shape, thus ensuring a tight fitting.

However, according to the conventional technology of Patent Literature 1; at the time of connecting the joint body with the lock ring holder, the joint body having the end portion provided with the engaged portion (9, 23) formed with the male thread, and the lock ring holder having, in the end portion, the engagement annular portion formed with the female thread into which the engaged part is inserted for engaging are thread-coupled and connected; thus, there is a problem that the threaded coupling may loosen due to vibration or aging of the construction over many years of use, resulting in a danger of fluid leakage through the inside of the steel pipe.

In the conventional technology of Patent Literature 2 as well, the connection is made by screwing the male thread formed on the outer circumference of the end portion of the joint with the female thread formed on the inner circumference of the nut; thus, as in the above description, there is a problem that vibration and aging of the construction due to many years of use may loosen the thread coupling, resulting in a danger of fluid leakage through the inside of the steel pipe.

Therefore, in order to solve these problems, the applicant proposed a connection mechanism for a steel pipe and a joint that includes a loosening prevention mechanism, which prevents a joint and a nut from rotating in the loosening direction relative to each other, by first interposing an elastic ring, one end of which is fixed to the joint, between the joint and the nut, and then abutting the other end portion of the elastic ring, which is elastically biased in the direction of the nut, on the steep inclined surface of a ratchet tooth provided on the nut.

### CITATION LIST

### PATENT LITERATURES

Patent Literature 1: JP 4352434 B1
Patent Literature 2: WO 2009/050823

### SUMMARY OF INVENTION

### TECHNICAL PROBLEMS

However, this newly proposed connection mechanism also has another problem, which is not possible to visually check from the outside whether the joint and nut are completely connected. In large buildings, there are hundreds or thousands of connection mechanisms, making it difficult to check for leakages by actually flowing fluid through pipes, therefore, a connection mechanism that enables efficient visual inspection of the connection work from the outside has been desired.

The present invention has been made to solve the above problems and its means are as follows.

### SOLUTIONS TO PROBLEMS

A connection mechanism for a steel pipe and a joint of the present invention includes: a joint that has, in an end portion of a coupling cylindrical portion having a fluid passage inside, a connecting cylindrical portion with a male thread formed on an outer circumference and a flange portion protruding outward from the outer circumference near a boundary between the coupling cylindrical portion and the connecting cylindrical portion; and a nut that has an annular outer cylindrical portion with a female thread which screws with the male thread of the joint formed on an inner circumference, and a steel pipe support portion that supports a steel pipe communicating with the fluid passage with the male thread and the female thread being screwed thereby to tightly connect the steel pipe with the joint, wherein the nut is provided with a plurality of ratchet teeth formed on an annular side face of the annular outer cylindrical portion of the nut that faces the flange portion side of the joint, each ratchet tooth having a ridge portion of a given height from the annular side face in the direction of the flange portion, a gentle inclined surface with a gentle inclination angle in the direction of relative rotation for tightening the nut, and a steep inclined surface with a steep angle in the direction of relative rotation for loosening the nut. The connection mechanism for a steel pipe and a joint further includes: an elastic ring externally fitted to a flat outer circumferential surface formed on the flange portion side of the male thread formed on the connecting cylindrical portion, interposed between the flange portion of the joint and the annular side face of the nut with an outer diameter of the ring shorter than the outer diameter of the annular outer cylindrical portion; and a hidden cylindrical portion extending from an outer circumferential edge side of the annular side face of the annular outer cylindrical portion towards the flange side, wherein an end portion of the inclined tip portion on the other end side of the elastic ring abuts on the steep inclined surface of the ratchet tooth to prevent relative loosening of the nut and the joint, and upon completion of the screwing of the male thread and the female thread, the hidden cylindrical portion covers an outer circumferential surface of the elastic ring in a state where the elastic ring is clamped between the flange portion and the annular side face, allowing visual confirmation from outside that the connection between the joint and the nut is complete.

In the connection mechanism for the steel pipe and the joint of the present invention, an inner circumferential side of the inclined tip portion is formed recessed and has a thin thickness in the diameter direction, and the flat outer circumferential surface on the flange side is provided with a circumferential groove in which the elastic ring is externally fitted.

In the connection mechanism for the steel pipe and the joint of the present invention, at least the outer circumferential surface of the elastic ring is painted a color, and the color applied to the outer circumferential surface of the elastic ring is fluorescent paint.

### ADVANTAGEOUS EFFECT OF INVENTION

According to the present invention; in a connection mechanism that causes both or any one of a male thread formed on the outer circumference of a connecting cylindrical portion of a joint and a female thread formed on the inner circumference of an annular outer cylindrical portion of the nut to relatively rotate thereby to tightly connect the joint and the steel pipe without leak of a fluid, the connection by screwing the male thread with the female thread is not loosened with an elapse of time or repeated vibration; thus, no gap is created in the connection site of the joint and steel pipe, preventing occurrence of the fluid leak. This is because one end side of the elastic ring interposed between the joint and the nut is engaged with the hook portion of the joint, and the other end side, is caused to abut on the steep inclined surface of the ratchet tooth formed on the annular side face of the annular outer cylindrical portion of the nut, so that the joint and the nut do not relatively rotate in the direction of loosening. Here, the relative rotation means that one or both of the joint and the nut simultaneously rotate in the tightening or loosening direction.

As the joint and the nut are further tightened, the other end side of the elastic ring slidably moves on the annular side face; when the joint and the nut rotate in the direction for relative proximity, the steep inclined surface at the tip of the ridge portion where the other end side of the elastic ring, while sliding on the gentle inclined surface of the ratchet tooth, has finished rising steeply drops by biasing force of the elastic ring, and the relative rotation is still possible even when further rotation is continued. However, when the joint and the nut are rotated in the direction for relative separation, that is in the direction for relative loosening, the other end side of the elastic ring fixed at one end portion to the joint can slide down the gentle inclined surface but cannot reach the ridge portion beyond the steep inclined surface, thereby abutting and stopping. This prevents the relative rotation, as a result, preventing the rotation in the loosening direction, making it possible to prevent the fluid leak.

Further, the ratchet tooth is formed on the annular side face of the annular outer cylindrical portion facing the joint side; thus, at the time of finishing the tightening, substantially the entire circumference of the ring forming the elastic ring can be squeezed between an opposing face of the joint and the annular side face. Therefore, this squeezing causes bending in the elastic ring and prevents the respective end portions of the elastic ring from being removed from the hook portion of the joint and the ratchet tooth, thus providing an effect of permanently preventing loosening.

The inner diameter of the elastic ring is substantially equal to the outer diameter of the connecting cylindrical portion, and the outer diameter of the elastic ring is substantially equal to the outer diameter of the annular outer cylindrical portion; thus, when externally fitting the elastic ring to the connecting cylindrical portion and tightening the elastic ring by the annular outer cylindrical portion, the outer circumference of the elastic ring is housed within the hidden cylindrical portion provided in the annular outer cylindrical portion, therefore, becoming invisible from and not protruding outside the annular outer cylindrical portion. Further, when the thickness of the elastic ring in the diameter direction is caused to be the same length as the annular side face, the elastic ring, at the time of connecting, can be snugly housed between the joint and the nut. Since one end portion of the notch portion of the elastic ring is provided with an engaging portion proper for the construction of the hook portion of the joint and the other end portion has an abutting portion that abuts on the steep inclined surface, it is possible to permanently maintain the prevention of relative loosening of the joint and the nut by the elastic ring after tightening. Further, upon completion of tightening, the hidden cylindrical portion prevents the outer circumferential surface of the elastic ring from being visible, allowing visual confirmation from the outside that the connection between the joint and the nut is complete. In this case, providing a circumferential groove close to the flange portion on the flat outer circumferential surface to allow the elastic ring to be externally fitted enables the elastic ring to fit into the circumferential groove during the tightening of the joint and the nut, preventing movement in the direction of the annular side face, thus improving work efficiency during installation, connection, and removal.

Forming a plurality of ratchet teeth on the annular side face reduces the return rotation in the loosening direction after the relative tightening of the joint and the nut, allowing for a fine strength selection.

An inclined tip portion, bent and inclined towards the annular side face, is provided on the other end side of the elastic ring, thus the end portion of the inclined tip portion is constantly biased in the direction of the annular side face and abuts on the annular side face, making it easier to slide on the surface of the ratchet tooth and more difficult to be removed as it abuts the steep inclined surface.

Because the outer circumference near a boundary between the coupling cylindrical portion and connecting cylindrical portion of the join is provided with a flange portion protruding in the outer circumferential direction, the annular side face of the annular outer cylindrical portion can be caused to abut on this flange portion, thus stabilizing the coupling state between the joint and the nut. The hook portion to be provided in the joint can also be provided in this flange, which is easier to process than providing it in other parts of the joint.

When the inner circumferential side of the inclined tip portion is recessed and becomes thin, the inclined tip portion floats off the connecting cylindrical portion at the time of the elastic ring being externally fitted to the connecting cylindrical portion, thus making it unlikely to contact and be obstructed by the male thread formed on the outer circumference of the connecting cylindrical portion, improving the efficiency of connection work.

At this time, a color is painted on the outer surface, it will be easier to visually confirm from the outside.

If the color is fluorescent paint, it grows in the dark by shining a black light, thus it will be easier to visually confirm. In this way, painting the color can improve the efficiency of visual confirmation of the tightening between the joint and the nut.

### BRIEF DESCRIPTION OF THE DRAWINGS

Fig. 1 is a cross-sectional view of a joint used in a connection mechanism for a steel pipe and a joint of an embodiment of the present invention.
Fig. 2 is a cross-sectional view of a nut used in the connection mechanism for the steel pipe and the joint of an embodiment of the present invention.
Fig. 3 is a side perspective view of an elastic ring.
Fig. 4 is a front view of the elastic ring.
Fig. 5 is a right-side view of the elastic ring.
Fig. 6 is a front view of the state in which the elastic ring is fitted to the joint and the steel pipe is connected by hand tightening with the nut.
Fig. 7 is a front view of the state in which the steel pipe is finally tightened from the state shown in Fig. 6.
Fig. 8 is enlarged explanatory view of the engagement between the other end side of the elastic ring and the ratchet tooth from the side.
Fig. 9 is a front view of the ratchet teeth around the entire circumference on the annular side face.
Fig. 10 is an enlarged cross-sectional view of the main part of Fig. 7.
Fig. 11 is an enlarged explanatory view of the fitting of the joint and the nut of the elastic ring in another embodiment.
Fig. 12 is a partial view corresponding to Fig. 10, which shows the formation of a circumferential groove near the flange portion of the connecting outer cylindrical portion.
Fig. 13 is another partial view corresponding to Fig. 10, which shows the formation of a circumferential groove near the flange portion of the connecting outer cylindrical portion.

### DESCRIPTION OF EMBODIMENTS

The best embodiment of a connection mechanism for a steel pipe and a joint of the present invention will be described with reference to the following drawings.

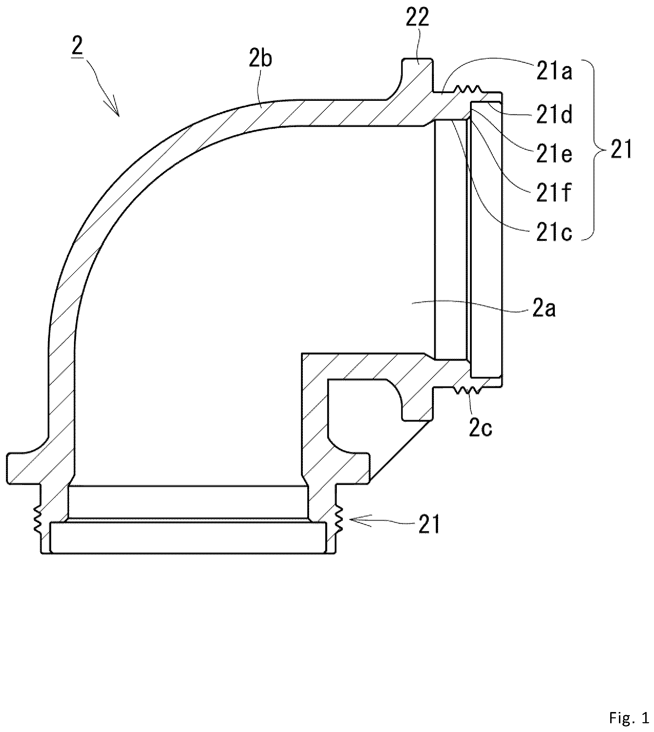

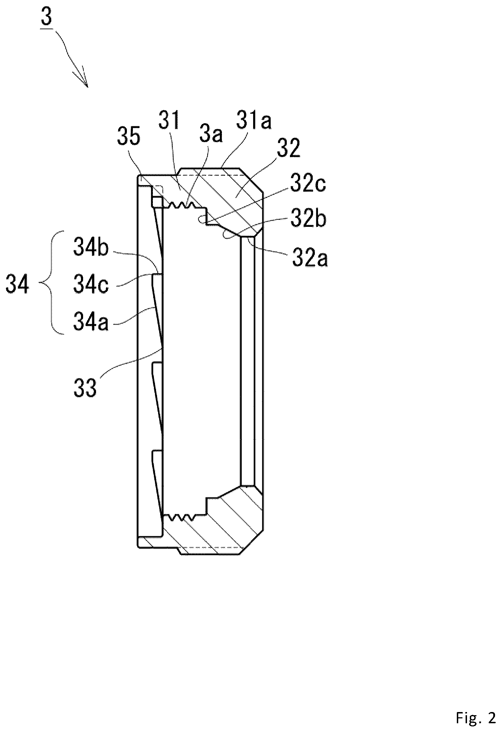

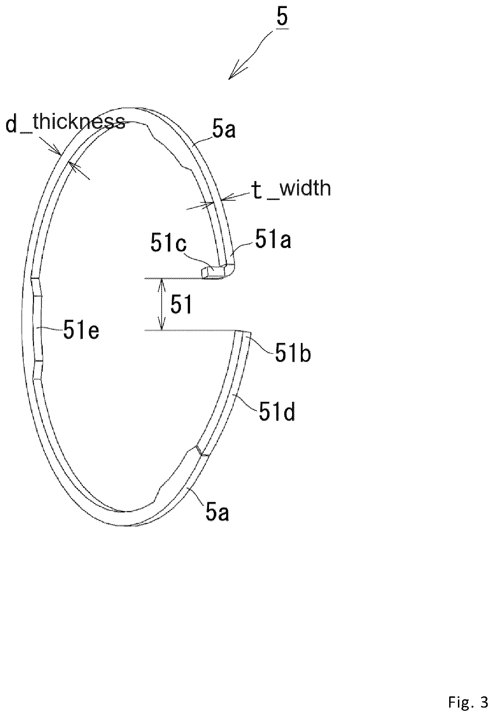

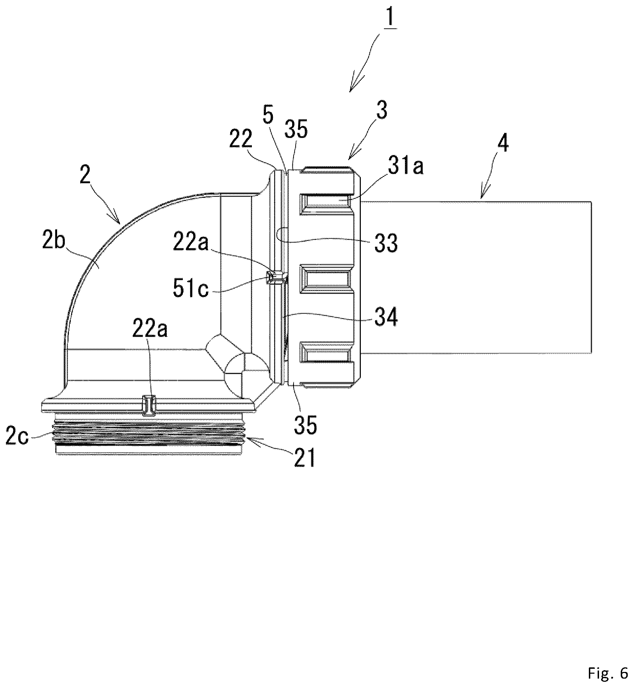

The embodiment of the connection mechanism for the steel pipe and the joint, mainly uses a joint 2 shown in Fig. 1, a nut 3 shown in Fig. 2, and an elastic ring 5 shown in Figs. 3 to 5, thereby to construct, a steel pipe 4 by a mechanism shown in Figs. 6 to 10, the connection mechanism for the steel pipe and the joint.

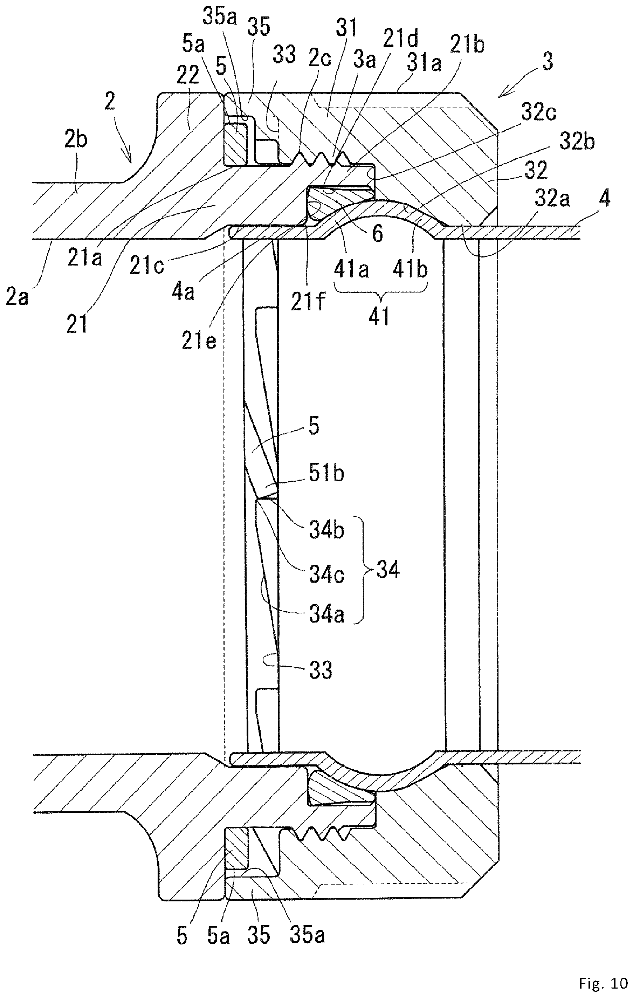

The joint 2 has, in the end portion of a coupling cylindrical portion 2b having a fluid passage 2a inside, a connecting cylindrical portion 21 with a male thread 2c formed on the outer circumference, as shown in Figs.1 and 10. In the present embodiment, as the coupling cylindrical portion 2b of the joint 2, an elbow provided with the connecting cylindrical portions 21 in both end portions of an L-shape is shown; according to the construction site, however, the coupling cylindrical portion 2b is selected from among structural shapes such as T, cross, and reducer. Further, the joint 2 has a flange portion 22 protruding outward from the outer circumference near a boundary between the coupling cylindrical portion 2b and the connecting cylindrical portion 21. This flange portion 22 is provided with a partially-cut hook portion 22a, as shown in the Fig.6, etc., which may be, however, provided in another site. Further, a flat outer circumferential surface 21a having a flat surface without forming the male thread 2c is provided around the outer circumference near the boundary between the coupling cylindrical portion 2b and the connecting cylindrical portion 21, and a flat insertion surface 21b without forming the male thread 2c is also provided at the tip.

The inner circumference of the connecting cylindrical portion 21 near the boundary with the coupling cylindrical portion 2b is provided with a medium-large-diameter portion 21c which is larger than the diameter of the fluid passage 2a and into which the tip of a steel pipe 4 is inserted, and a large-diameter portion 21d, which houses a packing 6, is provided on the tip side of this medium-large-diameter portion 21c. The packing 6 is housed in the area surrounded by the inner circumferential surface of this large-diameter portion 21d and a step surface 21e created by the diameter difference between the medium-large-diameter portion 21c and the large-diameter portion 21d. Further, there is provided a corner portion 21f where the step surface 21e intersects with the medium-large-diameter portion 21c.

As shown in the Figs. 2, 9, and 10, the nut 3, also called a bag nut, has an annular outer cylindrical portion 31 with a female thread 3a, which is screwed with the male thread 2c formed on the outer circumference of the connecting cylindrical portion 21 of the joint 2, formed on the inner circumference, and a steel pipe support portion 32 which is provided on one end side of the annular outer cylindrical portion 31 and which supports the steel pipe 4 communicating with the fluid passage 2a. On the side face of the annular outer cylindrical portion 31 opposite the steel pipe support portion 32, i.e., a narrow annular side face 33 which is a face facing the joint 2 side at the time of connecting, there are circumferentially formed arc-shaped ratchet tooth 34.

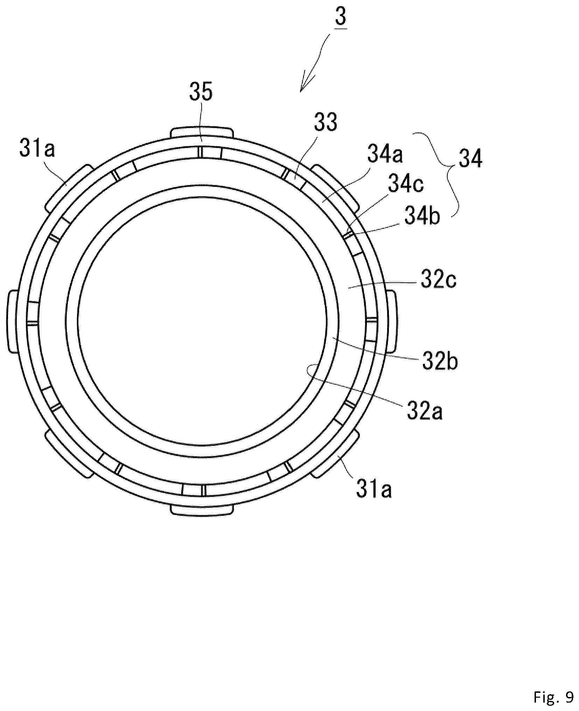

As shown in Figs. 6 to 9, the ratchet tooth 34 forms a gentle inclined surface 34a having a gentle downward inclination angle in the direction of the relative rotation for tightening the nut 3 to the joint 2, a steep inclined surface 34b having a steep upward inclination angle in the direction of the relative rotation for loosening the nut 3 to the joint 2, and a ridge portion 34c which has the height from an annular side face 33 common to the above gentle inclined surface 34a and steep inclined surface 34b. The number of arc-shaped ratchet teeth 34 provided on the annular side face 33 around the entire circumference can be one or more, but as shown in Fig. 9, the arc-shaped ratchet teeth 34 can be provided at equal spacings around the entire circumference, in which case the angle of loosening after tightening can be reduced. Furthermore, the angle of loosening can also be reduced by shortening the length of the gentle inclined surface 34a, the steep inclined surface 34b and the annular side face 33 between the two adjacent ratchet teeth 34. However, when the other end portion 51b of the inclined tip portion 51d fails to be in contact with the upper face of the ratchet tooth 34 after completion of tightening, the other end portion 51b must be so caused as to abut on the annular side face 33 where the ratchet tooth 34 is not provided; thus, the length and inclination angle of the inclined tip portion 51d, the length of one pitch of the ratchet tooth 34, the spacing distance between the ratchet teeth 34, and the like are determined after being comprehensively taken into account. The sum of the length of ridge portion 34c from the annular side face 33 and the width t of the ring of the elastic ring 5 as shown in the Fig.3 is the after-tightening spacing distance between the joint 2 and the nut 3.

It is provided with a hidden cylindrical portion 35 extending from the outer circumferential side of the annular side face 33 of the annular outer cylindrical portion 31 in the direction of the joint 2 side. The extension length of the hidden cylindrical portion 35 from the outer circumferential side of the annular side face 33 in the direction of the joint 2 side is the total length of the width t of the elastic ring 5 and the height of the ridge portion 34c of the ratchet tooth 34. If it is shorter than this, the outer circumferential surface 5a of the elastic ring 5 can always be visually confirmed from the outside even after tightening, which is undesirable, and conversely, if it is too long, the outer circumferential surface 5a will be hidden before the tightening is completed, making it impossible to visually confirm the completion of the tightening from the outside. Since the outer circumferential surface 5a of the elastic ring 5 is positioned inside the inner circumferential surface 35a of the hidden cylindrical portion 35, even when the other end portion 51b of the elastic ring 5 abuts the steep inclined surface 34b of the ratchet tooth 34 and a loosening rotational force acts to bias the ring of the elastic ring 5 in the direction of opening, the outer circumferential surface 5a abuts the inner circumferential surface 35a, preventing the ring from opening, which increases the frictional force between the outer circumferential surface 5a and the inner circumferential surface 35a, thereby also preventing the joint 2 and the nut 3 from rotating each other in the loosening direction.

The outer circumferential surface of the annular outer cylindrical portion 31 is provided with a plurality of non-slip bases 31a at equal spacings in the central axis direction of the nut 3, making it possible to easily rotate the nut 3 with a fingertip, providing reinforcement strength to the annular outer cylindrical portion 31. Further, an insertion hole 32a to insert the steel pipe 4 is provided in the center portion of the steel pipe support portion 32 provided at the one end side of the annular outer cylindrical portion 31; inside this insertion hole 32a, there are formed a press inclined surface 32b that presses the inclined surface 41b of a mountain-shaped projection portion 41 of the steel pipe 4 toward the joint 2 direction so as to press the inserted steel pipe 4 toward the joint 2 direction, and a vertical inner surface 32c which vertically rises from the end of the press inclined surface 32b toward the female thread 3a, as well shown in Fig 10.

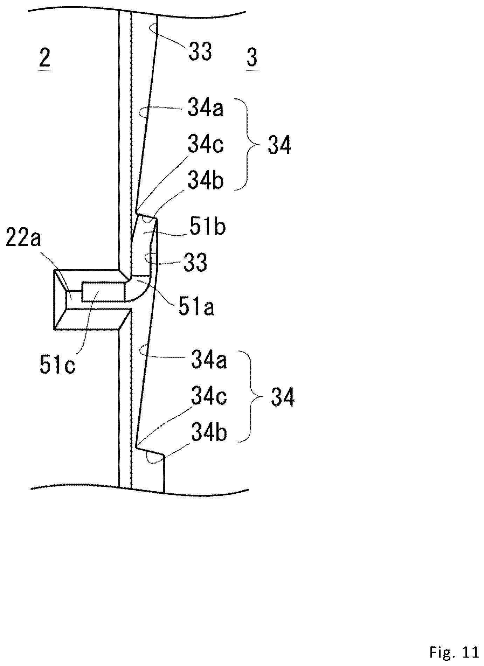

Concerning the above elastic ring, as well shown in Figs. 3 to 6, a plate-like member is formed by cutting out or the like into a circular ring so that the elastic ring has elasticity made of a metallic material such as stainless steel or a synthetic resin material and has a thin width t and the same or substantially the same thickness d as the annular side face 33;and the above elastic ring 5 has a notch portion 51 as a partial cutout of the ring. When stainless steel is used as this metal material, SUS304CSP is suitable. The length of the notch width of the notch portion 51 is not particularly limited; it may be such that the notch portion 51 is simply cut so that the distance between ring parts of one end portion 51a and other end portion 51b of the notch portion 51 is substantially zero and facing surfaces are close to each other; conversely, as shown in Fig. 11, the notch portion 51 may be large until the ring length portion of the elastic ring 5 is extremely short with the one end portion 51a and other end portion 51b of the notch portion 51 close to each other having almost no distance. The inner diameter of the ring is substantially the same as the diameter of the male thread 2c or the diameter of the flat outer circumferential surface 21a which are formed on the outer circumference of the connecting cylindrical portion 21 of the joint 2. Even when a slight error should be caused, the elasticity allows the elastic ring 5 to fit to the connecting cylindrical portion 21. Even when the notch portion 51 is so large that the length of the ring of the elastic ring 5 is so short that the ring cannot be externally fitted to the connecting cylindrical portion 21, the elastic ring 5 is usable; in this case, the curvature radius of the inner circumference of a part of the ring that is short should be the same as the curvature radius of the curve of the outer circumference of the connecting cylindrical portion 21. Further, the outer diameter of the ring is substantially the same as or slightly smaller than the outer diameter of the annular outer cylindrical portion 31.

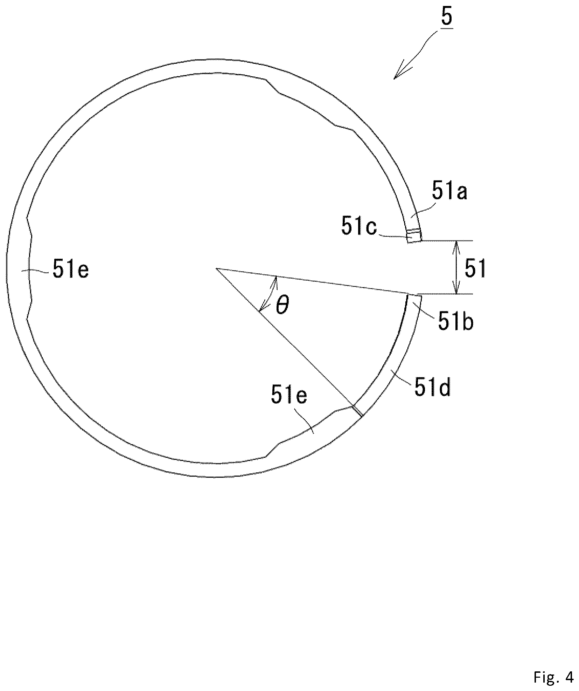

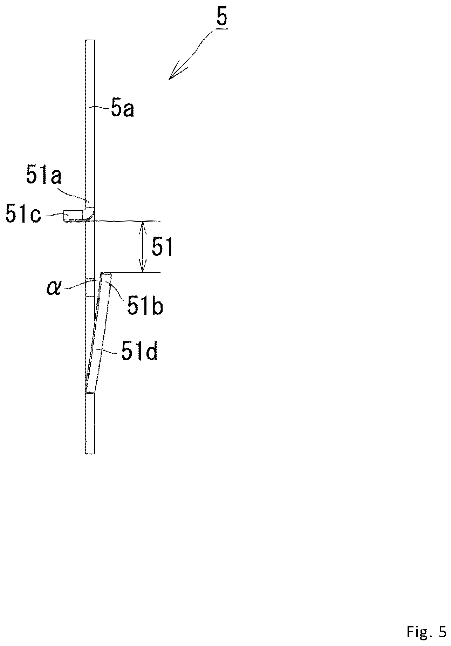

The one end portion 51a of the elastic ring 5, as shown in Figs. 3 to 5, is provided an engaging portion 51c, which engages the hook portion 22a provided in the flange portion 22 of the joint 2, in a manner to bend toward the joint 2. When the hook portion 22a is provided in another site of the joint 2, for example, on the flat outer circumferential surface 21a, the engaging portion 51c includes a downward protrusion; thus, the engaging portion 51c proper for that site is provided in the one end portion 51a. This engaging portion 51c or the one end portion 51a may be preliminarily fixed to the joint 2 by welding or the like. Further, the other end portion 51b of the elastic ring 5 slides on the annular side face 33 and on the gentle inclined surface 34a of the ratchet tooth 34, and abuts on the steep inclined surface 34b beyond the ridge portion 34c; thus, no special machining is required for the other end portion 51b and a cross section of cutting the ring may appear. Further, as shown in Fig. 4, the site from the other end portion 51b to the area of the center angle θ of the ring is made into an inclined tip portion 51d which is inclined in one direction side, relative to the other part of the ring, at an inclination angle α, as shown in Fig. 5; then the other end portion 51b, which is also the end portion of this inclined tip portion 51d at the time of placing, is biased in the direction of the upper face of the annular side face 33 and the upper face of the ratchet teeth 34 provided on the annular side face 33, making it easier to slide and to abut on and engage the steep inclined surface 34b as well.

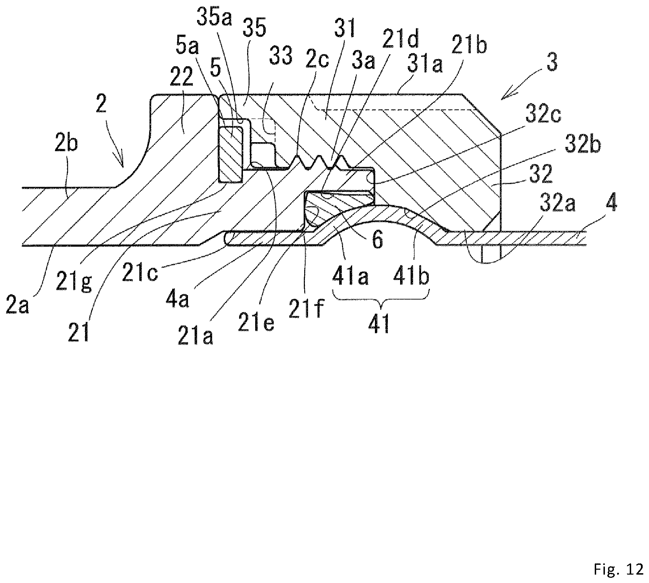

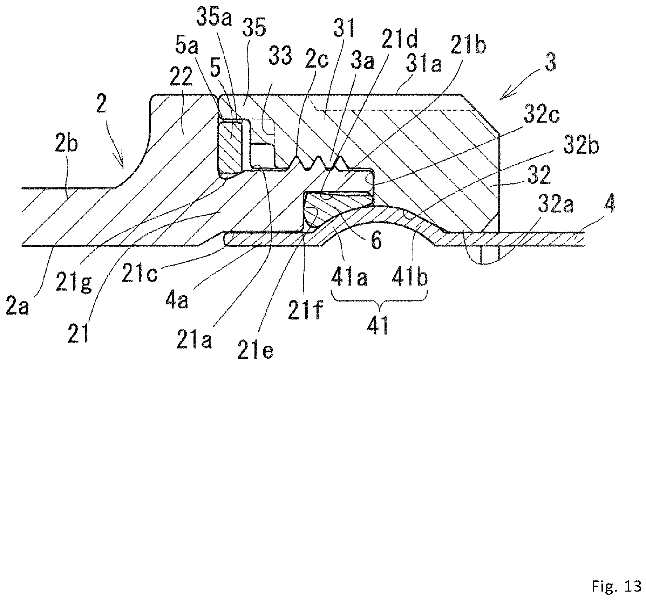

The reason why the plurality of circumferential protruding portions 51e are provided on the inner circumferential side and the thickness d is increasing is that, for externally fitting the ring part of the elastic ring 5 to the connecting cylindrical portion 21, the circumferential protruding portions 51e abut on the flat outer circumferential surface 21a of the connecting cylindrical portion 21, thereby to make it easy to match the height positions of the ring side face of the elastic ring 5 and the annular side face 33 for tight fitting. As shown in Figs. 12 and 13, a circumferential groove 21g may be formed near the flange portion 22 of the connecting cylindrical portion 21, and more specifically, on the flat outer circumferential surface 21a in contact with the lower part of the flange portion 22, into which the elastic ring 5 fits. Fig 12 shows a square groove into which the inner circumferential side of the elastic ring 5 can fit, and Fig 13 shows an inclined groove with an inclined surface which one of the lower corners of the elastic ring 5 abut on.

The thickness d of the outer circumferential surface 5a of the elastic ring 5 is preferably about 3 to 8 mm, and the width t is preferably about 1.7 to 3 mm, so when determining whether the connection between the joint 2 and the nut 3 is complete by visually confirming the outer circumferential surface 5a from the outside and confirming that it is hidden by the hidden cylindrical portion 35, it is desirable for the elastic ring 5 to have a color that can be distinguished from the metallic color of the joint 2 and the nut 3. While it is possible to distinguish by using different types of metals, in cases where the colors are similar, it is advisable to apply color to the outer circumferential surface of the elastic ring 5 to make it more visible. In this case, a blue immortal ink, which is easy to see and contrasts with the color of the metal surface, can be used, but it is not limited to this color. As a means of applying the color, in addition to coating the outer circumferential surface 5a with paint, other methods such as applying a colored tape may also be used. It is also preferable if fluorescent paint is used as a color, as it is easier to visually confirm with a barrack light in the dark. When using a synthetic resin material for the elastic ring 5, mixing pigment with the raw material will color the entire ring, including the outer circumferential surface 5a, so there is no need to paint color separately.

The procedure for constructing and using the connection mechanism 1 for the steel pipe and joint of the present invention, which mechanism includes the above configuration, will now be described. The steel pipe 4 used in the present embodiment is a long, thin-walled stainless steel pipe having two inclined surfaces and forming the mountain-shaped protruding portion 41, the one inclined surface 41a on the end portion 4a side of the steel pipe 4 and the other inclined surface 41b, as well shown in Fig. 10. The known method and device can be used for forming the mountain-shaped protruding portion 41 on the steel pipe 4 but not limited thereto; to give an example, the pipe expanding device shown in Patent No. 346754 can be effectively used. However, not limited to the steel pipe 4 having this mountain-shaped protruding portion 41, but any type of tightly connecting the pipe 4 to the joint 2 to prevent fluid leakage by screwing the joint 2 and the nut 3 facing each other is allowed.

First, as shown in Fig. 6, the elastic ring 5 is externally fitted to the connecting cylindrical portion 21, and is externally fitted to the flat outer circumferential surface 21a formed on the joint 2 side. The present embodiment shows the example in which the engaging portion 51c provided on the one end portion 51a of the notch portion 51 is engaged with the hook portion 22a provided in the joint 2, but the position and shape of the hook portion 22a provided in the joint 2 may be another position in the joint 2 or the hooking method may be a different one. Further, when the elastic ring 5 is externally fitted into the circumferential groove 21g shown in Figs. 12 and 13, the elastic ring 5 is fixed in position, preventing movement in the direction of the annular side face 33, thus improving the efficiency during the screwing connection of the joint 2 and the nut 3. Furthermore, if the elastic ring 5 is pre-attached to the connecting cylindrical portion 21 at the factory before shipment, the advantage is also that the elastic ring 5 will not come off during transportation.

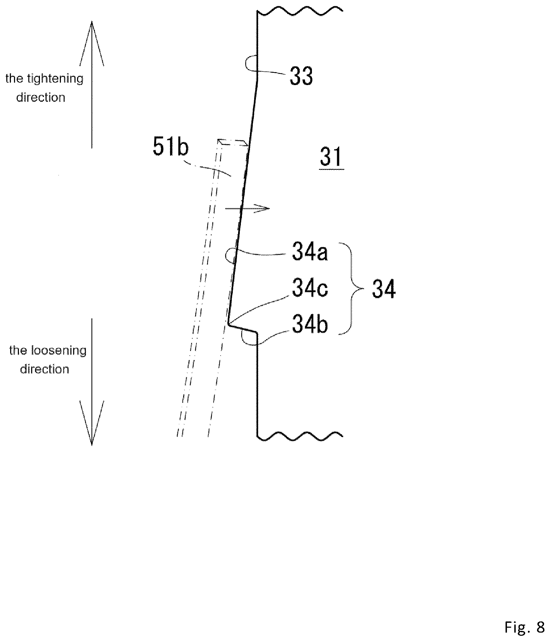

Then, the end portion 4a of the steel pipe 4 inserted into the insertion hole 32a of the nut 3 is inserted into the medium-large-diameter portion 21c of the joint 2 as shown in Figs 2, and 10. Then, while rotating, with the hand, the non-slip base 31a of the annular outer cylindrical portion 31, moving the nut 3 closer to the joint 2 causes the preset packing 6 to abut on the one inclined surface 41a of the mountain-shaped protruding portion 41. The female thread 3a of the annular outer cylindrical portion 31 is screwed with the male thread 2c of the connecting cylindrical portion 21; thus, further tightening, as shown in Fig. 5, due to the other end portion 51b of the inclined tip portion 51d of the elastic ring 5 being inclined toward the nut 3 side, causes the other end portion 51b of the inclined tip portion 51d to first abut in a state of being biased toward the annular side face 33, as shown in Fig. 8.

As the rotation of the nut 3 in the tightening direction further progresses, the other end portion 51b slides on the annular side face 33 and the arcuate ratchet teeth 34. The other end portion 51b moves up the gentle inclined surface 34a of the ratchet teeth 34 and moves over the ridge portion 34c, and then steeply drops down the steep inclined surface 34b. After the above rotating, and then tightening is performed to the point where the rotating can be done by hand, the other end portion 51b stops in some position on the gentle inclined surface 34a or on the annular side face 33, as shown in Figs. 6 and 8. At this stage, the flat insertion surface 21b at the tip of the above connecting cylindrical portion 21 advances to the inner portion of the annular outer cylindrical portion 31 and the tip face abuts on the vertical inner surface 32c of the steel pipe support portion 32. Then, the other inclined surface 41b of the mountain-shaped projection portion 41 of the steel pipe 4 is pressed toward the joint 2 by the press inclined surface 32b, and the one inclined surface 41a is pressed toward the nut 3 by the packing 6 and the corner portion 21f; thus, while keeping the tightened state as to prevent fluid leak from the gap between the steel pipe 4 and the inner circumferential side face of joint 2, the steel pipe 4 is temporarily connected with the joint 2.

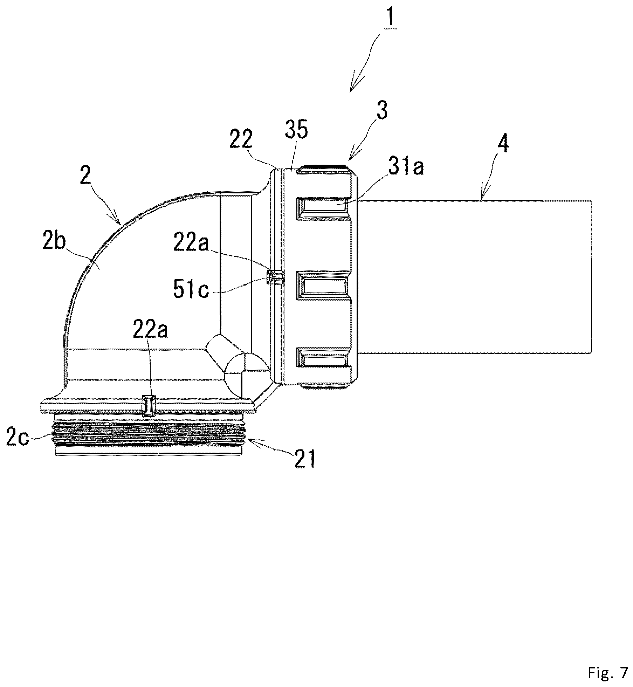

Then, further tightening the nut 3 strongly tightened using a tool completes the main tightening with the elastic ring 5 sandwiched between the joint 2 or flange portion 22 and the annular side face 33 of the annular outer cylindrical portion 31, as shown in Figs. 7 and 10. In this state, the side face of the elastic ring 5 on the nut 3 side is pressed toward the joint 2 by the ridge portion 34c of the ratchet tooth 34, then there is no gap at all between the elastic ring 5 and the joint 2 or flange portion 22 thereby to accomplish a tight fitting. Further, the elastic ring 5 and the nut 3, although a slight space part is created therebetween at the upper face parts of the gentle inclined surface 34a and steep inclined surface 34b of the ratchet tooth 34, have the tight fitting over the entire circumference. Then, the hidden cylindrical portion 35 covers the outer circumferential surface 5a of the elastic ring 5, so it is obscured from the outside and the color of the outer circumferential surface 5a cannot be visually confirmed. This makes it easy to visually confirm the completion of the connection of the joint 2 and the nut 3.

Thus, even in this tightened state alone, relative loosening between the joint 2 and the nut 3 is unlikely to occur due to frictional resistance between respective members; however, factors such as vibration and deterioration of the construction over time will dissolve the frictional resistance thereby to cause relative loosening. When, thereby, the nut 3 or the joint 2, or both have relatively rotated in the loosening direction, the one end portion 51a of the elastic ring 5 is fixed to the joint 2; thus, the other end portion 51b at the tip of the inclined tip portion 51d abuts on the steep inclined surface 34b thereby to prevent the joint 2 or the nut 3 from rotating in the loosening direction, thus preventing loosening. In addition, since the elastic ring 5 is subjected to a biasing force that expands the ring through the other end portion 51b, frictional force between the outer circumferential surface 5a of the elastic ring 5 and the inner circumferential surface 35a of the hidden cylindrical portion 35 arises, further preventing loosening. This action prevents not only the steel pipe 4 from being removed from the joint 2, as a matter of course, but also prevents a gap, which is due to loosening and which is between the packing 6 and the steel pipe 4, making it possible to prevent the fluid leak as well.

When the relative loosening rotation of the joint 2 or nut 3 starts due to loosening; if the other end portion 51b at the tip of the inclined tip portion 51d is in a position of contacting the annular side face 33 or the gentle inclined surface 34a, the relative loosening rotation for loosening will not stop until the other end portion 51b abuts on the steep inclined surface 34b. This loosening increases as the number of ratchet teeth 34 provided on the annular side face 33 decreases. That is, the longer the spacing distance between the ratchet teeth 34 on the annular side face 33, or the longer the length of the ratchet tooth 34, the greater the degree of loosening. Thus, when a larger number of ratchet teeth 34 are provided and the spacing distance between the respective ratchet teeth 34 is narrower, the advantage is that the degree of loosening can be reduced, although the machining work will increase.

If a notch portion of the notch portion 51 of the ring of the elastic ring 5 is only as wide as the notch groove that was cut, the contour angle of the ring is nearly 360°, and when in use, the notch portion will be large enough to substantially circle once the flat outer circumferential surface 21a of the connecting cylindrical portion 21. In this case, the ring part of the elastic ring 5 is, substantially around the entire circumference, squeezed between the joint 2 or flange portion 22 and the annular side face 33; thus, even when a large force acts in the loosening direction, the frictional resistance is increased and the one end portion 51a abuts on the steep inclined surface 34b, thus firmly performing the tightening without breaking the elastic ring 5. In addition, since the outer circumferential surface 5a of the elastic ring 5 is extensively exposed around the entire circumference, the advantage is that it becomes easier to detect insufficient connection from the outside. Conversely, enlarging the notch portion 51 makes the contour of the ring smaller and shorter, which can save material costs, but the visible portion of the outer circumferential surface 5a of the elastic ring 5 from the outside becomes smaller, thus, making it difficult to visually confirm the connection.

Further, in the present embodiment, the example has been described in which the male thread is screwed with the female thread and, between the joint 2 and the nut 3, the steel pipe 4 having the mountain-shaped protruding portion 41 is placed, thereby to join the joint 2 with the nut 3, but the present embodiment is also applicable to a connection mechanism including the step of causing any one or both of the joint 2 and the nut 3 to relatively rotate in the loosening or tightening direction by a measure other than the thread coupling or by using the steel pipe 4 without the mountain-shaped protruding portion 41.

For disconnecting the steel pipe 4 from the joint 2, a tool or the like is used thereby to rotate the joint 2 and the nut 3 in the loosening direction, separately from each other or simultaneously with each other, thereby to shear off the elastic ring 5 or to shear off the portion of engagement or abutment of the elastic ring 5 end portion on the joint 2 or the ratchet tooth 34, thus making it possible to easily perform disassembling.

As described above, according to the connection mechanism 1 for the steel pipe and the joint of the present invention, loosening can be prevented simply by keeping, at the time of connecting, the elastic ring 5 externally fitted to the connecting cylindrical portion 21, and the omission of tightening the joint 2 and the nut 3 during construction can be visually confirmed from the outside, thus improving the efficiency of connecting the steel pipe 4.

### INDUSTRIAL APPLICABILITY

The connection mechanism for the steel pipe and the joint of the present invention employs the construction in which the joint and the nut tighten and connect the steel pipe with the elastic ring interposed thereby to prevent loosening; thus, the connection mechanism can be used for constructing various steel pipe nets, through which the fluid passes, thereby to expand the range of application, and the connection mechanism allows the connection state to be visually confirmed from the outside, thereby improving the efficiency of construction work, thus as a result, the connection mechanism is expected to have a large demand, and can greatly contribute to the development of industry.

### DESCRIPTION OF REFERENCE SIGNS

- 1: connection mechanism for steel pipe and joint
- 2: joint
- 2a: fluid passage
- 2b: coupling cylindrical portion
- 2c: male thread
- 21: connecting cylindrical portion
- 21a: flat outer circumferential surface
- 21b: flat insertion surface
- 21c: medium-large-diameter portion
- 21d: large-diameter portion
- 21e: step surface
- 21f: corner portion
- 21g: circumferential groove
- 22: flange portion
- 22a: hook portion
- 3: nut
- 3a: female thread
- 31: annular outer cylindrical portion
- 31a: anon-slip base
- 32: steel pipe support portion
- 32a: insertion hole
- 32b: press inclined surface
- 32c: vertical inner surface
- 33: annular side face
- 34: ratchet tooth
- 34a: gentle inclined surface
- 34b: steep inclined surface
- 34c: ridge portion
- 35: hidden cylindrical portion
- 35a: inner circumferential surface
- 4: steel pipe
- 4a: end portion
- 41: mountain-shaped protruding portion
- 41a: one inclined surface
- 41b: other inclined surface
- 5: elastic ring
- 5a: outer circumferential surface
- 51: notch portion
- 51a: one end portion
- 51b: other end portion
- 51c: engaging portion
- 51d: inclined tip portion
- d: thickness
- t: width
- 6: packing

## Claims

1. A connection mechanism for a steel pipe and a joint comprising:
a joint that has, in an end portion of a coupling cylindrical portion having a fluid passage inside, a connecting cylindrical portion with a male thread formed on an outer circumference and a flange portion protruding outward from the outer circumference near a boundary between the coupling cylindrical portion and the connecting cylindrical portion; and
a nut that has an annular outer cylindrical portion with a female thread which screws with the male thread of the joint formed on an inner circumference, and a steel pipe support portion that supports a steel pipe communicating with the fluid passage with the male thread and the female thread being screwed thereby to tightly connect the steel pipe with the joint, wherein
the nut is provided with a plurality of ratchet teeth formed on an annular side face of the annular outer cylindrical portion of the nut that faces the flange portion side of the joint, each ratchet tooth having a ridge portion of a given height from the annular side face in the direction of the flange portion, a gentle inclined surface with a gentle inclination angle in the direction of relative rotation for tightening the nut, and a steep inclined surface with a steep angle in the direction of relative rotation for loosening the nut,
the connection mechanism for a steel pipe and a joint further comprising:
an elastic ring externally fitted to a flat outer circumferential surface formed on the flange portion side of the male thread formed on the connecting cylindrical portion, interposed between the flange portion of the joint and the annular side face of the nut with an outer diameter of the ring shorter than the outer diameter of the annular outer cylindrical portion; and
a hidden cylindrical portion extending from an outer circumferential edge side of the annular side face of the annular outer cylindrical portion towards the flange side, wherein
an end portion of the inclined tip portion on the other end side of the elastic ring abuts on the steep inclined surface of the ratchet tooth to prevent relative loosening of the nut and the joint, and upon completion of the screwing of the male thread and the female thread, the hidden cylindrical portion covers the outer circumferential surface of the elastic ring in a state where the elastic ring is clamped between the flange portion and the annular side face, allowing visual confirmation from outside that the connection between the joint and the nut is complete.

2. The connection mechanism for the steel pipe and the joint according to claim 1, wherein the flat outer circumferential surface on the flange side is provided with a circumferential groove in which the elastic ring is externally fitted.

3. The connection mechanism for the steel pipe and the joint according to claim 1, wherein an inner circumferential side of the inclined tip portion is formed recessed and has a thin thickness in the diameter direction.

4. The connection mechanism for the steel pipe and the joint according to claim 1, wherein at least the outer circumferential surface of the elastic ring is painted a color.

5. The connection mechanism for the steel pipe and the joint according to claim 4, wherein the color applied to the outer circumferential surface of the elastic ring is fluorescent paint.
